# DEMANDE DE BREVET EUROPEEN

(11) **EP 0 792 847 A1**
(43) Date de publication de la demande: **03.09.1997**
(21) Numéro de dépôt: 97400439.2
(22) Date de dépôt: 27.02.1997
(51) Int. Cl.: C03C 17/36

(54) **Substrats transparents munis d'empilements de couches minces trempables et/ou bombables**

(30) Priorité: 29.02.1996 DE 19607611
(71) Demandeur: SAINT-GOBAIN VITRAGE, 92400 Courbevoie (FR)
(72) Inventeur: Heinz, Bernhard, Dr., 52074 Aachen (DE); Kliem, Heinz, 52477 Alsdorf (DE); Kuhn, Norbert, 52134 Herzogenrath (DE); Fischer, Klaus, 52477 Alsdorf (DE)
(74) Mandataire: Renous Chan, Véronique

(57) **Abrégé**

L'objet de l'invention est un empilement de couches minces pouvant être bombé et/ou trempé pour substrat en verre, avec au moins une couche fonctionnelle en argent et des couches diélectriques antireflets en oxyde de zinc. Au-dessus et en dessous de la couche en argent, sont chaque fois placées des couches protectrices en zinc métallique. L'épaisseur de ces couches de zinc est ajustée de sorte que, dans les conditions de traitement thermique pour le bombage et/ou la trempe des substrats en verre, le zinc métallique est oxydé de préférence le plus complètement possible en oxyde de zinc.

## Description

L'invention concerne un empilement de couches minces sur substrat transparent du type substrat verrier, qui puisse subir des traitements thermiques post-dépôt du type bombage, trempe au recuit. L'empilement sur plaques en verre comprend au moins une couche fonctionnelle en argent, des couches diélectriques antireflets en oxyde de zinc et une couche de métal sacrificiel en zinc, placée au-dessus de la couche d'argent, entre celle-ci et la couche d'oxyde de zinc suivante.

Un empilement de couches minces approprié pour le bombage et la trempe, de ce type est décrit dans le document US-PS-4 718 932. L'empilement est déposé sur la plaque en verre plane par le procédé de pulvérisation cathodique assistée par champ magnétique, est bombé ultérieurement avec la plaque en verre et peut servir à la préparation de plaques en verre électriquement chauffables, pour faire des vitrages dégivrants pour véhicules, notamment. Il comprend une première couche en oxyde de zinc d'environ 48 nm d'épaisseur, une couche placée sur cette couche d'oxyde de zinc, d'une épaisseur d'environ 12 nm, en argent, une couche de métal sacrificiel déposée sur cette couche d'argent, en zinc métallique, et une couche en oxyde de zinc, placée sur celle-ci, de 44 nm d'épaisseur. L'épaisseur de la couche de métal sacrificiel en zinc, placée sur la couche d'argent, qui est de 7,5 nm, doit être choisie de sorte qu'elle soit complètement oxydée à l'air pendant le traitement thermique précédant le procédé de courbure et/ou le procédé de tension.

Lorsque l'on utilise des plaques en verre munies de couches partiellement réfléchissantes comme vitres de véhicule, elles doivent respecter des exigences précises concernant leurs propriétés optiques. Elles doivent non seulement présenter des valeurs minimales déterminées de transmission de la lumière (70% pour les vitres latérales et 75% pour les pare-brise), mais elles doivent également être, dans une certaine mesure, exemptes de défauts visibles comme des écarts de teinte, un voile de couleur, un aspect tacheté, etc. Il a été montré que l'empilement de couches pouvant être bombé du document US-PS-4 718 932 ne correspond pas à toutes ces exigences. En particulier, il a été déterminé que les valeurs de transmission lumineuse obtenues après le traitement de bombage de ces empilements connus dépendent des conditions de réchauffage impliquées par le bombage et/ou la trempe, à savoir de la température et de la durée de réchauffage, deux facteurs qui sont fréquemment soumis, pendant le travail pratique de production, à des variations certaines. En outre, on observe fréquemment, pour ces empilements, après le traitement de bombage, des défauts sous forme de taches, d'où un taux de rebut non négligeable, et, donc un rendement industriel peu élevé..

Le document EP 0 332 717 décrit des empilements à base d'argent et d'oxyde de zinc, avec plusieurs couches d'argent, où les couches d'oxyde de zinc sont présentes comme couches supérieure et inférieure de l'empilement, ainsi que comme couches intermédiaires entre les couches d'argent. Avec un tel empilement à couches multiples, on peut atteindre des valeurs de transmission lumineuse particulièrement favorables pour le domaine spectral visible, des valeurs de réflexion élevées dans le domaine infrarouge avec une chute marquée vers le domaine spectral visible, ainsi que des résistivités électriques superficielles faibles de couche. Ces empilements ne sont cependant pas aptes à supporter des traitements thermiques sous cette forme et ne conviennent pas comme couches pouvant être bombées et/ou trempées.

L'invention a pour objet l'amélioration des empilements décrits précédemment, afin d'améliorer la capacité de bombage du substrat, la possibilité de traitements thermiques à hautes températures, et leurs propriétés optiques, et notamment pour diminuer la dépendance de la transmission de lumière avec les conditions de traitement thermique.

Conformément à l'invention, cet objet est résolu en ce que l'on dispose également une couche de métal sacrificiel en zinc métallique, en dessous de la couche d'argent, entre celle-ci et la couche en oxyde de zinc située au-dessous.

On a montré que, par cette disposition suivant l'invention de cette couche de zinc métallique, les propriétés de l'empilement sont fortement améliorées. En particulier, on atteint une haute transmission lumineuse, qui n'est pas modifiée lorsque la durée et/ou la température du traitement thermique varient dans le cadre des conditions habituelles de fabrication. Au moyen des mesures suivant l'invention, par conséquent, on peut régler de manière reproductible l'aspect optique du substrat muni de l'empilement de couches, et notamment sa transmission lumineuse et sa couleur en réflexion, dans les conditions habituelles de production. On a, en outre, montré une amélioration de la qualité optique : le nombre de substrats à mettre au rebut à cause de la formation de taches après le traitement de bombage/trempe est fortement diminué. En outre, la résistivité superficielle de l'empilement après le procédé de bombage est essentiellement plus faible que pour les empilements connus. De plus, la capacité de bombage de l'empilement est également nettement amélioré : on peut atteindre des courbures particulièrement prononcées sans apparition de défauts optiques supplémentaires.

Dans une forme de réalisation préférée de l'invention, l'empilement comprend deux couches fonctionnelles en argent, où en dessous et au-dessus de chaque couche en argent, est placée chaque fois une couche de métal sacrificiel en zinc métallique. Entre les couches de zinc intermédiaires, ainsi que en dessous de la couche de zinc inférieure et au-dessus de la couche de zinc supérieure, sont déposées des couches antireflets en oxyde de zinc, de sorte que le système stratifié formé de cette manière comprenne neuf couches individuelles. Un tel empilement constitué de neuf couches individuelles a également la structure ZnO-Zn-Ag-Zn-ZnO-Zn-Ag-Zn-ZnO.

Lorsqu'une plaque en verre munie de cet empilement doit faire partie ultérieurement d'un vitrage feuilleté de sécurité, on place de préférence une couche en SnO₂ sur la couche de ZnO supérieure, on améliore ainsi l'adhérence de face de la plaque en verre munie de l'empilement à la feuille thermoplastique assurant le feuilletage avec la deuxième plaque de verre, du type polyvinylbutyral. Dans ce cas, on choisit l'épaisseur de la couche de ZnO supérieure et de la couche de SnO₂ de sorte qu'elles présentent, ensemble, l'effet antireflet souhaité, et que leur épaisseur totale atteigne 26 à 30 nm.

On a montré que, dans l'empilement suivant l'invention, chacune des couches de zinc métallique les plus extérieures doit, au mieux, avoir une épaisseur essentiellement plus grande que les autres couches de zinc métallique internes se trouvant entre ces couches de zinc extérieures. (on comprend par couches extérieures les couches de Zn se trouvant à l'extérieur des deux couches d'argent, c'est-à-dire celles qui ne sont pas disposées entre les deux couches fonctionnelles, la même terminologie étant adoptée pour les couches anti-reflets en ZnO). Ainsi, les couches de zinc métallique internes (en opposition aux couches de Zn « extérieures » précédemment mentionnées) peuvent par exemple présenter chacune une épaisseur de 0,5 à 1,0 nm, alors que les couches de zinc métallique extérieures, la supérieure (celle au-dessus de la seconde couche d'argent) et l'inférieure (celle en dessous de la première couche d'argent) doivent être chacune environ cinq fois plus épaisses, leur épaisseur devant ainsi atteindre 2,5 à 5 nm, de préférence 3,0 à 4,0 nm.

En particulier, on obtient de bonnes propriétés non seulement en ce qui concerne les valeurs souhaitées de transmission lumineuse et de réflexion optiques, mais également concernant l'insensibilité de la couche vis-à-vis de traitements thermiques de type bombage/trempe des substrats en verre recouverts de tels empilements, lorsque, pour un empilement à neuf couches, les couches individuelles présentent les épaisseurs suivantes :

| Plaque en verre | |
|---|---|
| ZnO | 26-30 nm |
| Zn | 3,0-4,0 nm |
| Ag | 8-10 nm |
| Zn | 0,5-1,0 nm |
| ZnO | 70-75 nm |
| Zn | 0,5-1,0 nm |
| Ag | 8-10 nm |
| Zn | 3,0-4,0 nm |
| ZnO | 26-30 nm |

Dans ce qui suit, on décrit un exemple de réalisation pour la préparation d'un pare-brise bombé pour véhicule, utilisant un empilement suivant l'invention.

Une plaque en verre flotté de 2 mm d'épaisseur est munie, dans un dispositif de revêtement en continu, par le procédé de pulvérisation cathodique assistée par champ magnétique, de l'empilement suivant :

| Verre flotté | |
|---|---|
| ZnO | 28 nm |
| Zn | 3,4 nm |
| Ag | 9,0 nm |
| Zn | 0,7 nm |
| ZnO | 72,5 nm |
| Zn | 0,7 nm |
| Ag | 9,0 nm |
| Zn | 3,4 nm |
| ZnO | 21,0 nm |
| SnO₂ | 7,0 nm |

La plaque en verre une fois munie de l'empilement est bombée par un procédé de bombage par gravité, à une température de bombage de 650°C et à l'air. Après le bombage, l'empilement ne présente aucune fissure, aucun défaut ou voile de couleur. Avant le bombage et après le bombage, on mesure la résistivité électrique superficielle. Elle atteint avant le bombage, 6,4 ohms/unité de surface et après le bombage, 2,0 ohms/unité de surface.

Les plaques en verre enduites et bombées sont associées à une autre plaque en verre bombée par l'intermédiaire d'une feuille thermoplastique en polyvinylbutyral d'après les procédés classiques de feuilletage et par utilisation de chaleur et de pression, où la face de la plaque munie de l'empilement est orientée vers la feuille thermoplastique. On mesure les différentes propriétés optiques des vitrages feuilletés de sécurité ainsi préparés, à savoir la transmission de lumière totale T_{L} selon l'illuminant A, la transmission d'énergie totale T_{E} (PM) et la transmission dans le domaine IR T_{IR} (PM), ainsi que les valeurs correspondantes de réflexion, d'après les procédés de mesure décrits dans la publication CIE n°15 et la norme DIN 5033. Les mesures de réflexion sont réalisées des deux côtés des vitrages feuilletés, à savoir non seulement sur le côté de la plaque en verre munie de l'empilement (externe), mais aussi sur le côté de la plaque en verre dépourvue de couches minces(« interne »). En outre, on détermine la couleur des plaques en verre de sécurité.

Les mesures conduisent aux valeurs suivantes :

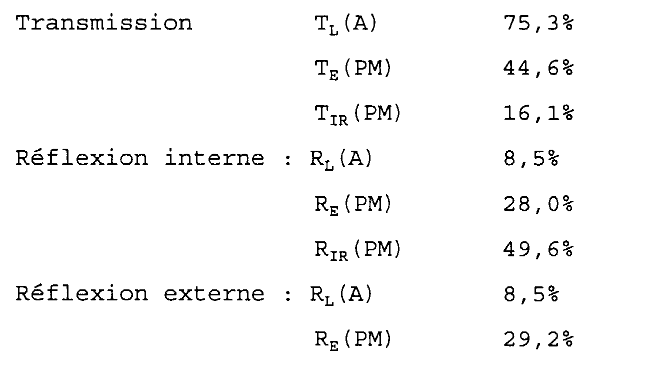

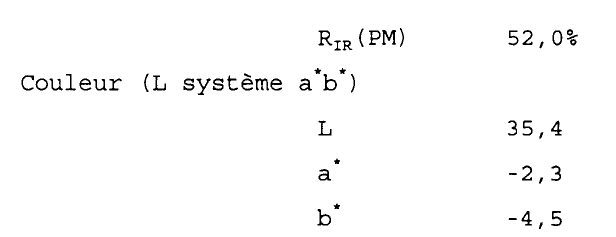

Les valeurs mesurées se situent dans les limites données, notamment avec des T_{L} supérieures à 75 % prévues par les normes en vigueur, de sorte que les vitrages feuilletés de sécurité peuvent être utilisés comme pare-brise de véhicule.

Après le dépôt de chaque couche d'argent, la couche de Zn et qui la recouvre est partiellement ou totalement oxydée, la couche de Zn sous-jacente à chacune des couches d'argent restant généralement non ou peu oxydée. Après le traitement thermique, l'ensemble des couches de Zn subit à des degrés divers des oxydations. En final, elles sont généralement toutes oxydées, au moins à 80 %.

L'invention permet ainsi la fabrication de vitrages à propriétés de réflexion dans l'infra-rouge et/ou à propriétés dans le domaine du rayonnement solaire avec un empilement de couches minces du type de ceux décrits notamment dans les demandes de brevet EP-0-611 215 et EP-0 678 484, et qui comporte au moins une couche métallique à propriétés dans l'infra-rouge, notamment bas-émissive, disposée entre deux revêtements à base de matériau diélectrique et un revêtement sous-jacent à la couche à propriétés dans l'infra-rouge comportant au moins un revêtement de mouillage qui est adjacent à ladite couche et qui comprend une couche à base d'oxyde de tantale ou d'oxyde de niobium ou d'oxyde de zinc, et qui soient en outre trempables/bombables.

Chaque couche métallique à propriétés dans l'infrarouge de l'empilement peut être munie sur ses faces non pas d'une seule couche en ZrO, mais d'une couche ou d'un empilement de couches de matériau diélectrique. Ces matériaux peuvent notamment être constitués d'au moins un des composés suivants : Si₃N₄, ZnO, SnO₂, Ta₂O₅, Nb₂O_{5,} WO_{3,} TiO₂.

L'invention permet aussi la fabrication de vitrages d'isolation thermique et/ou de protection solaire du type de celui décrit dans le demande de brevet EP-638 528 c'est-à-dire un empilement comprenant au moins deux couches à propriétés dans l'infra-rouge de type argent, notamment ceux où le substrat comporte successivement :
- un premier revêtement en matériau diélectrique,
- une première couche à propriétés de réflexion dans l'infra-rouge, notamment à base de métal,
- un second revêtement en matériau diélectrique,
- une seconde couche à propriétés de réflexion dans l'infra-rouge, notamment à base de métal,
- un troisième revêtement en matériau diélectrique, l'épaisseur de la première couche à propriétés de réflexion dans l'infra-rouge correspondant à environ 50 à 80 %, notamment 55 à 75 %, et de préférence 60 à 65 %, de celle de la seconde couche à propriétés de réflexion dans l'infra-rouge.

A noter que les effets bénéfiques de l'invention peuvent également être obtenus si la couche métallique sacrificielle sur l'argent ou la couche métallique sous l'argent sont non pas en zinc Zn mais en niobium Nb.Là encore, après traitement thermiquement, elles sont majoritairement oxydées en Nb₂O₅.

## Revendications

1. Empilement de couches minces aptes à subir des traitements thermiques du type bombage/trempe/recuit pour substrats en verre, comprenant au moins une couche fonctionnelle à base d'argent, des couches diélectriques antireflets et notamment en oxyde de zinc et une couche de métal sacrificiel en zinc, placée au-dessus de la couche d'argent, entre celle-ci et la couche d'oxyde de zinc suivante, caractérisé en ce qu'une couche de métal sacrificiel en zinc métallique est placée, en outre, en dessous de la couche d'argent, entre celle-ci et la couche d'oxyde de zinc située au-dessous.

2. Empilement de couches minces suivant la revendication 1, caractérisé en ce que, pour une structure verre-ZnO-Zn-Ag-Zn-ZnO, les deux couches en zinc ont chacune une épaisseur de 3,0 à 4,0 nm.

3. Empilement de couches minces suivant la revendication 1, caractérisé en ce qu'il présente la structure verre-ZnO-Zn-Ag-Zn-ZnO-Zn-Ag-Zn-ZnO.

4. Empilement de couches minces suivant la revendication 3, caractérisé en ce que les couches en zinc supérieure et inférieure ont une épaisseur de 3,0 à 4,0 nm et les deux couches en zinc intermédiaires, chacune une épaisseur de 0,5 à 1,0 nm.

5. Empilement de couches minces suivant la revendication 3 ou 4, caractérisé en ce que les couches en ZnO supérieure et inférieure ont chacune une épaisseur de 26 à 30 nm et la couche en ZnO intermédiaire une épaisseur de 70 à 75 nm.

6. Empilement de couches minces suivant l'une quelconque des revendications précédentes, caractérisé en ce que la couche diélectrique antireflet supérieure consiste en une couche en ZnO, voisine de la couche en Zn, associées à une couche en SnO₂, présentant globalement une épaisseur de 26 à 30 nm.

7. - Empilement de couches minces suivant l'une quelconque des revendications précédentes, caractérisé en ce qu'on substitue au moins une des couches en zinc en dessus et/ou en dessous d'au moins une des couches d'argent par une couche à base de niobium.

8. Utilisation d'une plaque en verre plane, enduite d'un empilement de couches minces suivant l'une quelconque des revendications précédentes pour la préparation de vitrages traités thermiquement, notamment bombés et/ou trempés notamment destinés à l'équipement des véhicules.
